# EUROPEAN PATENT SPECIFICATION

(11) **EP 0 566 603 B1**
(45) Date of publication and mention of the grant of the patent: **05.06.1996**
(21) Application number: 92901846.3
(22) Date of filing: 09.01.1992
(51) Int. Cl.: H04B 7/26, H03H 7/46, H04B 1/04, H01Q 5/00

(54) **RADIO TRANSCEIVER SYSTEM**
FUNKSENDE- UND -EMPFANGSANORDNUNG
SYSTEME EMETTEUR-RECEPTEUR RADIO ELECTRIQUE

(30) Priority: 09.01.1991 FI 910114
(43) Date of publication of application: 27.10.1993
(73) Proprietor: NOKIA TELECOMMUNICATIONS OY, FIN-02600 Espoo (FI)
(72) Inventor: PROKKOLA, Esko, SF-90440 Kempele (FI)
(74) Representative: Tomlinson, Kerry John
(86) International application number: FI9200008
(87) International publication number: WO9212579

(56) References cited:
- EP-A- 0 316 611
- DE-C- 3 545 639
- DE-C- 3 632 984
- US-A- 4 211 894
- US-A- 4 449 128

## Description

The invention relates to a radio transceiver system, comprising several transceivers, an antenna means, a filter means connectable to the antenna means for filtering signals applied to the antenna means and received by the antenna means, and a dividing unit means or other similar means for dividing the signals received by the antenna means common to the transceivers to the different transceivers, and that the signals from the transceivers are arranged to be applied through the filter means of the system to the antenna means common to the transceivers of the system.

Today, due to the use of radio transceivers of different types and the development of device technology, various types of mobile telephone systems, such as TACS, ETACS, NMT, and in the future e.g. GSM, are in operation e.g. in mobile telephone networks. In known arrangements, the different radio transceiver systems are connected to the antenna means in such a way that each different type of base station uses its own antenna. The antenna structures of a base station of one system already existing at the base station location are not utilized, but a new antenna and other associated structures are constructed at the base station location when installing the base station of the other system to be installed at the base station location.

The prior art has several disadvantages. The material and construction costs of several antennas are unreasonably high when a base station network is installed for a mobile telephone network of a new type. Unnecessary cable laying results from the multiple cable laying required for an extra antenna. The use of a common base station location for mobile telephone systems of different types is thus rather inefficient. New systems (such as GSM) often use their own antenna structures and antennas, even though the structures of the existing mobile telephone systems already constructed at the base station location (such as TACS, ETACS) could be utilized with slight modifications.

The patent document US 4211894 discloses a transmitter-multiplexer equipment for use in a mobile telephone system, comprising several transmitters connected through their own bandpass filters to an antenna device having several elements. In this case, however, the transmitters of the same radio system, that is, of a single specific mobile telephone system are connected to a single antenna aggregate. The arrangement disclosed in this patent document concerns only a common-antenna system for transmitters instead of a common-antenna system for the transceivers of the base stations of several mobile telephone systems of different types as in the present invention.

The patent document DE-3545639 discloses a transmitter equipment comprising several high-frequency transmitters each operating at its own transmitting frequency differing from the others. In the equipment described in this patent document each transmitter is connectable to a single antenna. The antenna comprises several elements divided into different groups. The transmitters and the antenna groups are interconnected so that the radiation patterns generated by each antenna group from the transmitting signals of the different transmitters join into a common broader radiation pattern. This arrangement is used in conventional USW networks. The patent document EP 316611 discloses an equipment with at least two radio transmitters and also intended for use in a USW network, the transmitters being connected to a single common antenna. In the equipment, part of the signal of the control amplifier of one transmitter is applied at a suitable phase and with a suitable power to the input of the power amplifier of another transmitter in order to compensate for the influence of one transmitter at the output of the power amplifier of the other transmitter. The patent document US 4449128 discloses a circulator coupling in which at least three transmitters are connected to a common antenna through three circulators and a combiner having four inputs. In this case, different transmitters in the same radio system are connected to a common antenna. A similar circulator coupling is disclosed in the patent document DE 3632984.

In the prior art arrangements the common antenna is thus used only as a transmitting antenna for different transmitters in the same radio system. In addition, the arrangements of the prior art are mainly concerned with common-antenna systems for the transmitters of the broadcasting networks within the USW range.

The object of the present invention is to provide a radio transceiver system which avoids the above-mentioned disadvantages associated with the prior art.

This is achieved by means of a radio transceiver system according to the invention, which is characterized in that the transceivers belong to radio systems of different types, and that the radio transceivers of the systems of different types are base stations in mobile telephone systems, such as TACS, ETACS and GSM.

The invention is based on the idea that a common-antenna system, that is, a common antenna and a common-antenna filter are used for the base stations of mobile telephone systems of different types, thus avoiding unnecessary construction and use of substantially similar apparatus arrangements. An advantage of the radio transceiver system of the invention is that an existing antenna and antenna cable can be used, and so the invention enables a more efficient utilization of a common base station location for the base stations of mobile telephone networks of different types. The tower structures of the antennas can also be lighter, in addition to which the control of the common antenna of the system is considerably easier and simpler than in the prior arrangements.

The invention will now be described in greater detail with reference to the attached drawings, in which
Figure 1 is a block diagram of a radio transceiver system according to the invention;
Figure 2 shows a block diagram of a common-antenna filter and the connection of the filter to the antenna.

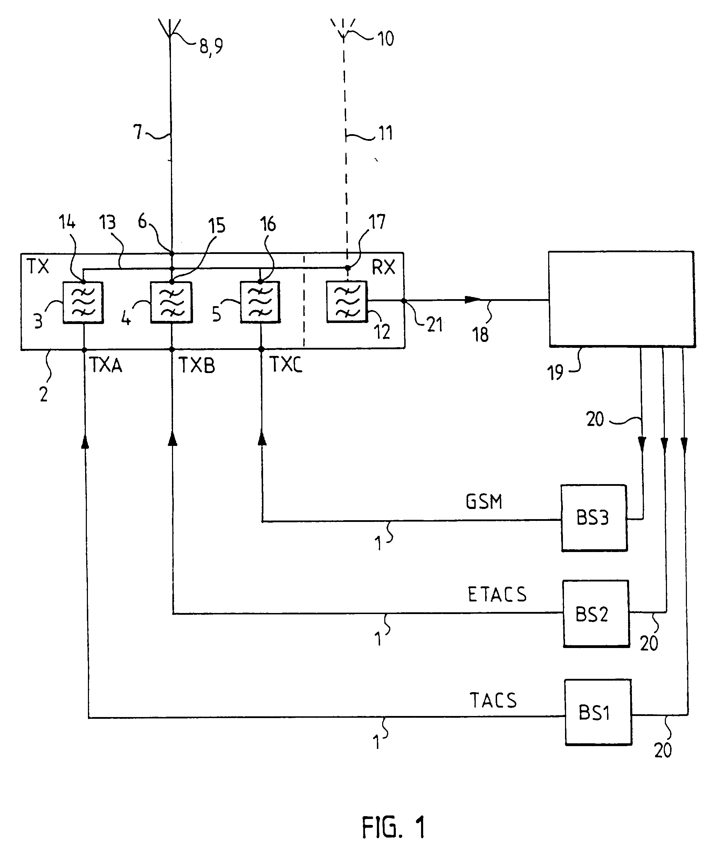

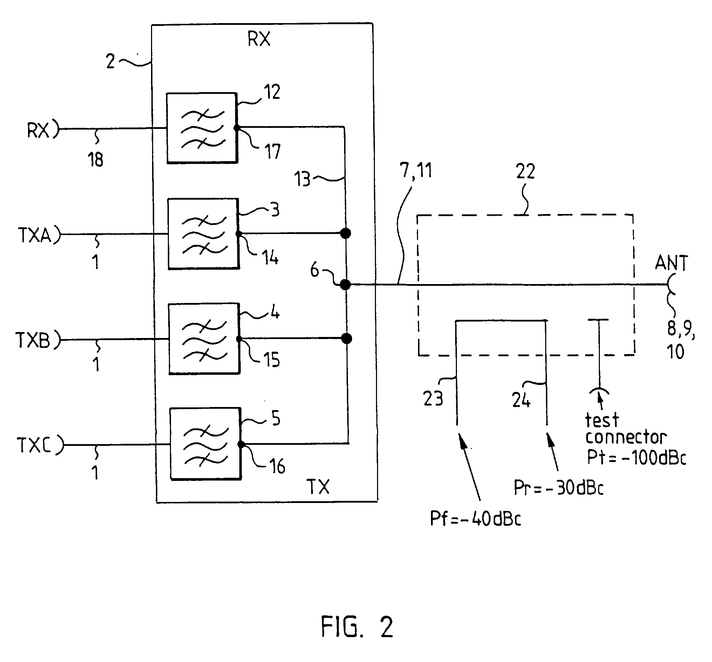

Referring to Figures 1 and 2, the operation of the radio transceiver system according to the invention will be discussed first. The radio transceiver system comprises several radio transceivers BS1, BS2, BS3 which are base stations of mobile telephone systems of different types; for instance, BS1 represents a base station in the TACS system, BS2 represents a base station in the ETACS system, and BS3 represents a base station in the GSM system. The figures and the text describe the configuration of a single block in a complete system comprising several blocks. Below the term "base station" will be used in place of the term "radio transceiver". There are at least two base stations; in the figures, three base stations are shown.

The base stations BS1, BS2 and BS3 are connected by cables 1 to a filter means 2 acting as a common-antenna filter and comprising bandpass filters 3, 4, and 5 tuned to the different systems and acting as transmitter filters, the number of the bandpass filters being substantially equal to the number of the different type of base stations BS1, BS2, BS3 ... BSn. The cables 1 connect the outputs TX1out, TX2out and TX3out of the transmitter combiners (not shown) of each base station to the transmitter inputs TXA, TXB and TXC of the filter means 2 acting as the common-antenna filter. The transmitter inputs TXA, TXB and TXC of the common-antenna filter 2 are further connected through the actual transmitter filters 3, 4 and 5 to an antenna output/input 6 in the common-antenna filter 2, and the antenna output/input 6 is further connected to an antenna 8 by an antenna cable 7.

The bandpass filters 3, 4 and 5 acting as transmitter filters are tuned so that the pass bands of the filters 3, 4 and 5 will not overlap. The transmitter filters 3, 4 and 5 separate the different transmitter inputs TXA, TXB and TXC of the filter means from each other, and so a signal applied to one of the above-mentioned transmitter filters is not visible in the other filters; for instance, a signal applied to the transmitter input TXA of the filter means 2, that is, to the filter 3, is not visible in the filters 4 and 5.

The common output 6 of the actual transmitter filters of the filter means 2 acting as the common-antenna filter is connected to the antenna means 8 by the cable 7 or the like, which antenna means may be an omnidirectional antenna or a sectionalized antenna; in the latter case, the blocks shown in Figure 1 are multiplied by the number of the antenna sectors.

The base stations of the radio transceiver systems of different types either use the same antenna 8 both in transmission and reception or the different systems have separately a common transmitting antenna 9 and receiving antenna 10, the latter having its own antenna cable 11.

In the signal reception section the filter means 2 acting as the common-antenna filter comprises at least one, preferably one receiver filter 12 the frequency range or pass band of which is below the pass band of the transmitter filters 3, 4 and 5 in the case of the TACS, ETACS and GSM systems. The receiver filter 12 attenuates the transmitter signals as well as other frequencies outside the receiver band. The bandpass filter 12 acting as the receiver filter is connected to the antenna means 8 by the antenna cable 7 or 11, which antenna means may be formed by either a single common transmitting/ receiving antenna 8, or a separate transmitting antenna 9 and receiving antenna 10 which are common to the different transceivers, in this specific case, to the base stations BS1, BS2, BS3 ... BSn.

The filter means 2 further comprises a summing network 13 or other similar means, by means of which the outputs 14, 15, 16 of the transmitter filters 3, 4, 5 and, on the other hand, the input 17 of the receiver filter 12 are connectable at the antenna input/output 6, through which the transmitter signal TX can be applied to the antenna line 7, 8.

The receiver filter 12 of the filter means 2 is connected by a cable 18 or the like to a dividing unit 19 or the like means, which divides the receiver signal RX applied to the dividing unit 19 from the receiver filter 12 into portions the number of which equals to the number n of the base stations BS1, BS2, BS3 ... BSn of different types. From the dividing unit 19 the signal is further applied to each one of the base station BS1, BS2, BS3 ... BSn of different types by cables 20. The dividing unit 19 known *per se* comprises at least a dividing network and directional couplers (not shown).

The division of frequency into portions can also be carried out in the filter means 2; in this case, however, several RX filters 12 would be needed, so that several filters similar to the RX filter 12 would form a means corresponding to the dividing unit 19 by means of the cables 20 connected to said several filters similar to the RX filter 12.

In the filter means 2 the receiver filter 12 is positioned between the receiver input 17 of the filter means 2 and an output 21 of the filter means 2 connected to the dividing unit 19.

In the preferred embodiment of the invention the filter means 2 acting as the common-antenna filter is of the so-called Quadplexer type, and it comprises, corresponding to the number (n=3) of the base stations BS1, BS2, BS3 of the mobile telephone networks of different types, three bandpass filters 3, 4 and 5 as transmitter filters, one for each base station BS1, BS2, BS3, and a single common bandpass filter 12 as a receiver filter. The receiver filter 12 may also be positioned in connection with the dividing unit 19. These arrangements are structurally very compact.

In one preferred embodiment of the invention, the radio transceiver system comprises a measuring arrangement 22 for forward and reflecting power, which arrangement is common to the base stations BS1, BS2, BS3 ... BSn of the radio telephone systems of different types and measures the power acting in the antenna 8, 9, and so the measurement of the power radiating in the antenna 8, 9, 10 can be carried out in a simple manner. The measuring arrangement 22 comprises a test connector Pf measuring the forward power to the common antenna 8, 9, 10, through which connector the measurement can be carried out with an attenuation of -40 dBc, and the measuring arrangement 22 further comprises a test connector Pr through which the power reflected from the antenna can be measured with an attenuation of -30 dBc. The sampling of the test connectors Pf and Pr from the antenna line 7 is effected e.g. by capture wires 23, 24.

The drawings and the description related to them are only intended to illustrate the present invention. In its details, the radio transceiver system according to the invention may vary within the scope of the attached claims.

## Claims

1. A radio transceiver system comprising several transceivers (BS1, BS2, BS3 ... BSn), an antenna means (8, 9, 10), a filter means (2) connectable to the antenna means (8, 9, 10) for filtering signals (TX, RX) applied to the antenna means (8, 9) and received by the antenna means (8, 10), and a dividing unit means (19) or other similar means for dividing the signals (RX) received by the antenna means (8, 10) common to the transceivers to the different transceivers (BS1, BS2, BS3 ... BSn), and that the signals (TX) from the transceivers (BS1, BS2, BS3 ... BSn) are arranged to be applied through the filter means (2) of the system to the antenna means (8, 9) common to the transceivers (BS1, BS2, BS3 ... BSn) of the system, **characterized** in that the transceivers (BS1, BS2, BS3 ... BSn) belong to radio systems of different types, and that the radio transceivers (BS1, BS2, BS3) of the systems of different types are base stations in mobile telephone systems, such as TACS, ETACS and GSM.

2. A radio transceiver system according to claim 1, **characterized** in that the filter means (2) connectable to the antenna means (8) is connectable to a combined transmitting/receiving antenna (8) common to the base stations (BS1, BS2, BS3 ... BSn) of the mobile telephone systems of different types.

3. A radio transceiver system according to claim 1, **characterized** in that the filter means (2) connectable to the antenna means (8) is connectable to a separate transmitting antenna (9) and separate receiving antenna (10), the antennas being common to the base stations (BS1, BS2, BS3 ... BSn) of the mobile telephone systems of different types.

4. A radio transceiver system according to claim 1, 2 or 3, **characterized** in that the filter means (2) comprises transmitter filter means (3, 4, 5) the number of which is substantially equal to the number (n) of the base stations (BS1, BS2, BS3 ... BSn) of the mobile telephone systems of different types for filtering the transmitting signal (TX), and at least one receiver filter means (12) for filtering the receiver signal (RX).

5. A radio transceiver system according to claim 4, **characterized** in that the filter means (2) is of the so-called Quadplexer type, and it comprises, corresponding to the number (n=3) of the base stations (BS1, BS2, BS3) of the mobile telephone systems of different types, a corresponding number (3) of bandpass filters (3, 4, 5) as transmitter filters, one for each base station (BS1, BS2, BS3), and one common bandpass filter (12) as a receiver filter.

6. A radio transceiver system according to any of the preceding claims, **characterized** in that the system comprises measuring arrangement (22) for forward and reflecting power, the measuring arrangement being common to the base stations (BS1, BS2, BS3 ... BSn) of the mobile telephone systems of different types and being arranged to measure the power acting in the antenna.

## Patentansprüche

1. Funk-Sende-Empfänger-System, das folgendes aufweist:
- mehrere Transceiver (BS1, BS2, BS3 ..., BSn),
- eine Antenneneinrichtung (8, 9, 10),
- eine Filtereinrichtung (2), die an die Antenneneinrichtung (8, 9, 10) anschließbar ist, um Signale (TX, RX) zu filtern, die an die Antenneneinrichtung (8, 9) angelegt und von der Antenneneinrichtung (8, 10) empfangen werden, und
- eine Teilereinheit (19) oder eine andere ähnliche Einrichtung, um die Signale (RX), die von den gemeinsam für die Transceiver vorgesehenen Antenneneinrichtungen empfangen werden, auf die verschiedenen Transceiver (BS1, BS2, BS3 ..., BSn) zu verteilen, wobei die Signale (TX) von den Transceivern (BS1, BS2, BS3 ..., BSn) so vorgesehen sind, daß sie durch die Filtereinrichtung (2) des Systems an die gemeinsam für die Transceiver (BS1, BS2, BS3 ..., BSn) des Systems vorgesehenen Antenneneinrichtungen angelegt werden,
dadurch gekennzeichnet,
daß die Transceiver (BS1, BS2, BS3, ..., BSn) zu Funksystemen von verschiedenen Typen gehören und daß die Funk-Transceiver (BS1, BS2, BS3) der Systeme von verschiedenen Typen Basisstationen in mobilen Telefonsystemen sind, wie z.B. TACS, ETACS und GSM.

2. Funk-Sende-Empfänger-System nach Anspruch 1,
dadurch gekennzeichnet,
daß die Filtereinrichtung (2), die an die Antenneneinrichtung (8) anschließbar ist, an eine kombinierte Sende/Empfangs-Antenne (8) anschließbar ist, die gemeinsam für die Basisstationen (BS1,BS2,BS3, ..., BSn) der mobilen Telefonsysteme von verschiedenen Typen vorgesehen ist.

3. Funk-Sende-Empfänger-System nach Anspruch 1,
dadurch gekennzeichnet,
daß die Filtereinrichtung (2), die an die Antenneneinrichtung (8) anschließbar ist, an eine separate Sendeantenne (9) und eine separate Empfangsantenne (10) anschließbar ist, wobei die Antennen gemeinsam für die Basisstationen (BS1, BS2, BS3, ..., BSn) der mobilen Telefonsysteme von verschiedenen Typen vorgesehen ist.

4. Funk-Sende-Empfänger-System nach Anspruch 1, 2 oder 3,
dadurch gekennzeichnet,
daß die Filtereinrichtung (2) Sendefiltereinrichtungen (3, 4, 5) aufweist, deren Anzahl im wesentlichen gleich der Anzahl (n) der Basisstationen (BS1, BS2,BS3, ..., BSn) der mobilen Telefonsysteme von verschiedenen Typen ist, um das Sendesignal (TX) zu filtern, sowie mindestens eine Empfängerfiltereinrichtung (12) aufweist, um das Empfangssignal (RX) zu filtern.

5. Funk-Sende-Empfänger-System nach Anspruch 4,
dadurch gekennzeichnet,
daß die Filtereinrichtung (2) vom sogenannten Quadplexer-Typ ist und sie, entsprechend der Anzahl (n = 3) der Basisstationen (BS1, BS2, BS3) der mobilen Telefonsysteme von verschiedenen Typen, eine entsprechende Anzahl (3) von Bandpaßfiltern (3, 4, 5) als Sendefilter aufweist, und zwar einen für jede Basisstation (BS1,BS2, BS3) und einen gemeinsamen Bandpaßfilter (12) als Empfängerfilter.

6. Funk-Sende-Empfänger-System nach einem der vorhergehenden Ansprüche,
dadurch gekennzeichnet,
daß das System eine Meßanordnung (22) für das Durchlaßvermögen und das Reflexionsvermögen aufweist, wobei die Meßanordnung gemeinsam für die Basisstationen (BS1, BS2, BS3, ..., BSn) der mobilen Telefonsysteme von verschiedenen Typen vorgesehen und so angeordnet ist, daß sie die in der Antenne wirkende Leistung mißt.

## Revendications

1. Système d'émetteur-récepteur radio comprenant plusieurs émetteurs-récepteurs (BS1, BS2, BS3 ... BSn), un moyen d'antenne (8, 9, 10), un moyen de filtrage (2) qui peut être relié au moyen d'antenne (8, 9, 10) pour filtrer des signaux (TX, RX) appliqués au moyen d'antenne (8, 9) et reçus par le moyen d'antenne (8, 10), et une unité de division (19) ou autre moyen similaire pour diviser les signaux (RX) reçus par le moyen d'antenne (8, 10) commun aux émetteurs-récepteurs et les transmettre au différents émetteurs-récepteurs (BS1, BS2, BS3 ... BSn), les signaux (TX) des émetteurs-récepteurs (BS1, BS2, BS3, ...BSn) étant prévus pour être appliqués, en passant par le moyen de filtrage (2) du système, au moyen d'antenne (8, 9) commun aux émetteurs-récepteurs (BS1, BS2, BS3 ... BSn) du système,
caractérisé en ce que les émetteurs-récepteurs (BS1, BS2, BS3 ... BSn) appartiennent à des systèmes radio de différents types, et que les émetteurs-récepteurs (BS1, BS2, BS3) des systèmes de différents types sont des stations de base de systèmes téléphoniques mobiles, tels que TACS, ETACS et GSM.

2. Système d'émetteur-récepteur radio selon la revendication 1,
caractérisé en ce que le moyen de filtrage (2) connectable au moyen d'antenne (8) peut être relié à une antenne combinée d'émission/réception (8) commune aux stations de base (BS1, BS2, BS3 ... BSn) des systèmes téléphoniques mobiles de différents types.

3. Système d'émetteur-récepteur radio selon la revendication 1,
caractérisé en ce que le moyen de filtrage (2) qui peut être relié au moyen d'antenne (8) peut être relié à une antenne d'émission (9) et une antenne de réception (10) séparées, les antennes étant communes aux stations de base (BS1, BS2, BS3 ... BSn) des systèmes téléphoniques mobiles de différents types.

4. Système d'émetteur-récepteur radio selon la revendication 1, 2 ou 3,
caractérisé en ce que le moyen de filtrage (2) comprend des éléments de filtre d'émetteur (3, 4, 5) dont le nombre est sensiblement égal au nombre (n) de stations de base (BS1, BS2, BS3 ... BSn) des systèmes téléphoniques mobiles de différents types, pour filtrer le signal (TX) de l'émetteur, et au moins un élément de filtre de récepteur (12) pour filtrer le signal (RX) du récepteur;

5. Système d'émetteur-récepteur radio selon la revendication 4,
caractérisé en ce que le moyen de filtrage (2) est du type appelé Quadplexeur et comprend, selon le nombre (n = 3) de stations de base (BS1, BS2, BS3) des systèmes téléphoniques mobiles de différents types, un nombre correspondant (3) de filtres passe-bande (3, 4, 5) en tant que filtres d'émetteur, un pour chaque station de base (BS1, BS2, BS3), et un filtre passe-bande commun (12) en tant que filtre de récepteur.

6. Système d'émetteur-récepteur radio selon l'une quelconque des revendications précédentes,
caractérisé en ce que le système comprend un ensemble (22) de mesure de la puissance directe et réfléchie, l'ensemble de mesure étant commun aux stations de base (BS1, BS2, BS3 ... BSn) des systèmes téléphoniques mobiles de différents types et agencé pour mesurer la puissance agissant sur l'antenne.
